# EUROPEAN PATENT SPECIFICATION

(11) **EP 0 438 721 B1**
(45) Date of publication and mention of the grant of the patent: **06.07.1994**
(21) Application number: 90124365.9
(22) Date of filing: 17.12.1990
(51) Int. Cl.: B29C 45/12, B29C 45/07, B29C 45/32

(54) **Tandem injection molding machine with direct feed to molds**
Tandem-Spritzmaschine mit direkter Zufuhr zu Formen
Machine à mouler par injection en tandem avec alimentation directe des moules

(30) Priority: 26.01.1990 US 470693
(43) Date of publication of application: 31.07.1991
(73) Proprietor: HUSKY INJECTION MOLDING SYSTEMS LTD., Bolton Ontario L7E 5S5 (CA)
(72) Inventor: Von Buren, Stefan, 101 Toronto, Ontario M6S SeZ (CA); Paulovic, Anton Stefan, Bolton, Ontario L7E 3Z8 (CA)
(74) Representative: Weiss, Peter, Dr. rer.nat.

(56) References cited:
- EP-A- 0 326 175
- EP-A- 0 435 010
- FR-A- 2 361 991
- GB-A- 676 536

## Description

The present invention relates to an injection molding machine according to the first part of claim 1 and especially to injection molding machines having at least two molding stations arranged in tandem wherein a single movable nozzle is employed to service each molding in sequence.

The FR-A 2 361 991 relates to injection molding articles from elastomeric stock materials. The apparatus comprises a plurality of separate and individually free-standing mold press units having independently controlled cure time cycles disposed in linear array, a track having spaced parallel rails extending adjacent to each of said mold press units, a carriage movable along said track, injection means supported on said carriage for movement to injection registry with a mold in any selected one of said press mold units from any other of said units.

Lock means are affixed individually on each of said mold press units and locking means on said injection means that locking means being interengageable with said lock means of a selected mold press unit to resist forces tending to separate the injection means from the mold press unit during injection of said compound into the mold press unit and to isolate that forces from structures supporting the mold press unit.

This apparatus shows mold press units which are not tandemly arranged. The mold press units are arranged adjacent each to the other and need a lot of room. Furthermore the carriage is separated from the mold press units and needs also a lot of room.

An arrangement comparable with the above mentioned present invention is shown in the EP-A 0 326 175. There is shown a tandemly arranged injection molding machine with a central platen means supported by tierods and movable to and from a fixed platen along that rods to define a first axis and injection unit for supplying moldable material, a hot runner system operable to connect with that injection unit, power means for clamping said injection unit to said hot runner system, said hot runner system including a manifold distributor means communicating with a manifold means. The problem is the cooperation of the injection unit and the power means for clamping said injection unit to said hot runner system. For each mold inlet means one clamping means for the supply means is necessary. The EP-A 0 326 175 formes the preamble of the independent claims 1 and 15.

The object of the present invention is to simplify the injection molding machine and to improve the injection of the material into said mold means.

For the solution of that object according to the present invention as defined in the claims 1 and 15 the nozzle clamp means is carried by said supply means and forms a unitary assembly together with the nozzle means which is moved from mold inlet means to mold inlet means.

It is the feature of the present invention to provide a source of moldable compound including a nozzle means where the nozzle is moveable, while in communication with the compound source, from station to station to introduce moldable compound into a mold located at the respective stations.

A further feature of the invention is the provision of mold means having a parting line wherein the mold means includes a mold inlet means which is arranged coaxially with at least a portion of the mold parting line.

A further feature of the invention is the provision of a mold inlet means which is a seamless extension of the mold means.

A still further feature of the invention is the provision of means such as an extruder or like apparatus for advancing moldable material toward a molding station wherein a nozzle means is carried by supply means and the supply means and the nozzle means are moveable as a unitary assembly from station to station.

A further feature of the invention is the provision of primary clamping means for clamping molds along a longitudinal axis of the molding machine and a secondary clamping means for clamping the nozzle means directly to a mold (or to a hot runner manifold servicing a mold) along an axis that is generally perpendicular to the longitudinal axis.

It is a further feature of the invention wherein a secondary clamping means is provided at each molding station.

A further feature of the invention is the provision of moveable platen disposed between two mold stations where the platen supports hot runner manifolds servicing molds at each station, and the platen includes secondary clamping means individual to each manifold for clamping a moveable nozzle to a manifold inlet.

The language "mold inlet means" includes a seamless extension of a mold or a hot runner manifold servicing a mold.

Other features and advantages of the present invention will become more apparent from an examination of the succeeding specification when read in connection with the appended drawings, in which;

### BRIED DESCRIPTION OF THE DRAWINGS

Figure 1 is a side elevational view of a typical tandem arrangement of mold stations A and B.
Figure 2 is a top plan view of the illustration of Figure 1.
Figure 3 is a fragmentary view of a portion of Figure 2, enlarged for clarity.
Figure 4 is a vertical section of Figure 3 in the plane of line 4-4 as viewed in the direction of the arrows.
Figure 5 is a top plane view, partially in section, showing an alternative embodiment of the present invention with clamping means according to the state of art as known from EP-A-0 326 175.
Figure 6 is a sectional view of the showing of Figure 5 as viewed in the plane of the line 6-6 and in the direction of the arrows, and;
Figure 7 is a sectional view of Figure 6 as viewed on the plane of line 7-7 and in the direction of the arrows.

### DETAILED DESCRIPTION OF THE INVENTION

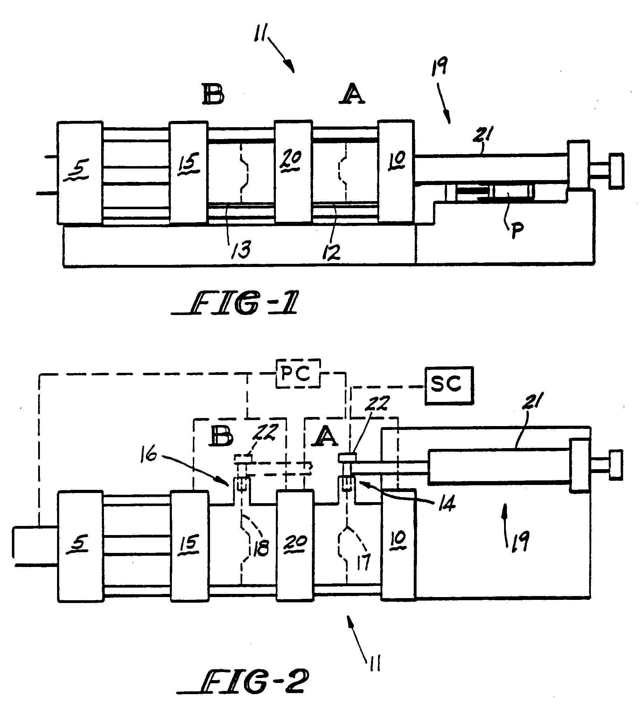

Referring in detail to Figures 1, 2, 3 and 4, a typical tandemly arranged injection molding machine 11 includes fixed platens 5 and 10, moveable platens 15 and 20 and two molding stations A and B, each having molds 12 and 13 opened, closed and clamped under control of primary clamping means (PC) in well known fashion. That is, both molds can be opened separately or individually and can be clamped separately or in unison depending upon the manner in which the primary clamping means is programmed.

Each mold means has an inlet means 14 and 16 which is an extension of the mold body and the inlet means is generally coaxial with the mold parting lines 17 and 18.

The inlet means disclosed is a seamless adjunct to the mold body; obviously the inlet means could be designed as a separate piece part fastened by appropriate means to the mold body.

Molding material is supplied to the mold stations A and B by a moveable molding material supply means 19, which in the present disclosure, is an extruder 21 having an attached nozzle means 22 and a nozzle valve 23.

The extruder, nozzle means and valves are moveable as an assembly, to and fro, from mold station to mold station under control of a first power means P.

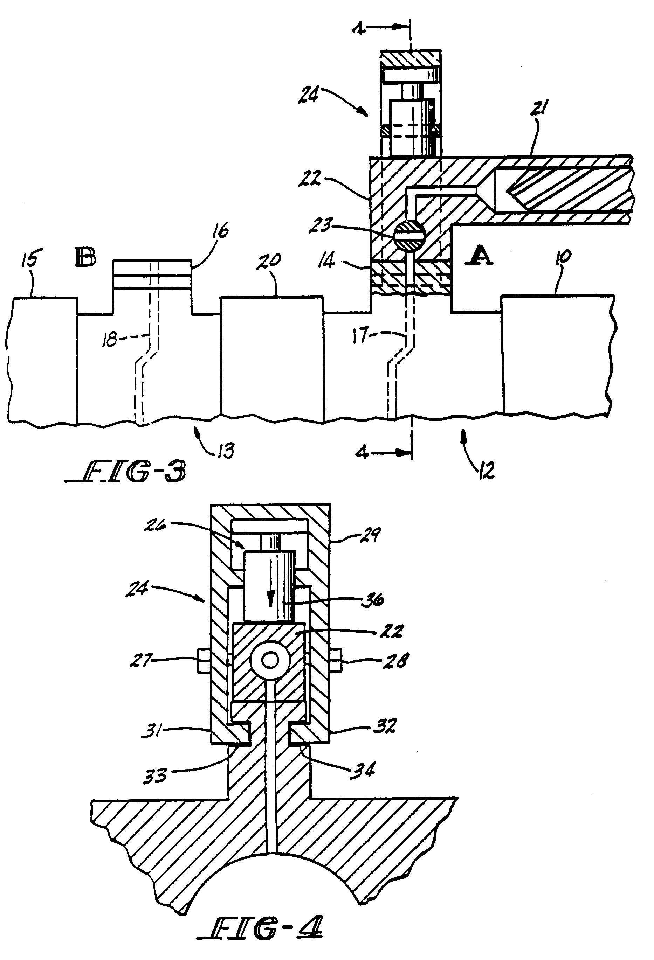

As indicated in greater detail in Figures 3 and 4, the extruder 21, its nozzle 22 and valve 23 are moveable into registration with a mold inlet means such as is illustrated in Figure 3.

In the arrangement of Figures 3 and 4, the moveable assembly includes a nozzle clamp means 24 and nozzle clamp power means 26.

The nozzle clamp power means 26, secured to the nozzle means by a suitable fastener such as by bolts 27 and 28, comprises a piston-cylinder assembly supported in a body member terminating in a pair of dogs or claws 31 and 32, operable to slide into and make an interlocking connection with mating slots 33 and 34 formed in the mold inlet means as is most apparent in Figure 4.

When the extruder, nozzle, nozzle valve, nozzle clamp and nozzle clamp power means are moved as an assembly and are positioned in register with the nozzle inlet means as shown in Fig 3 at Station A, the nozzle clamp power means 26 is energized to place the dogs 31 and 32 under a tensile stress as piston 36 bears down upon the nozzle 22 to seal the nozzle to the inlet means. Upon opening nozzle valve 23, moldable material is injected into the mold.

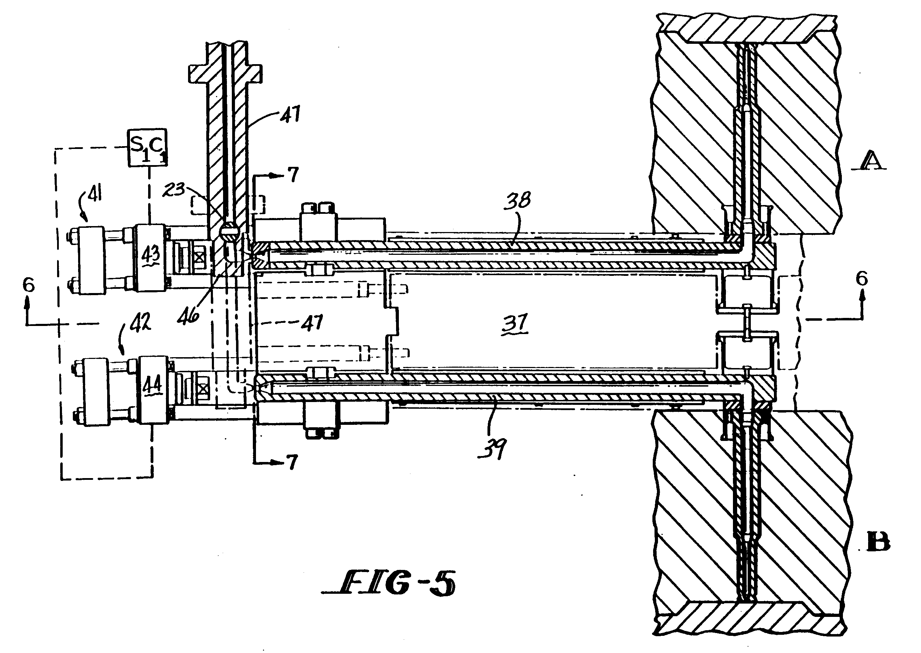

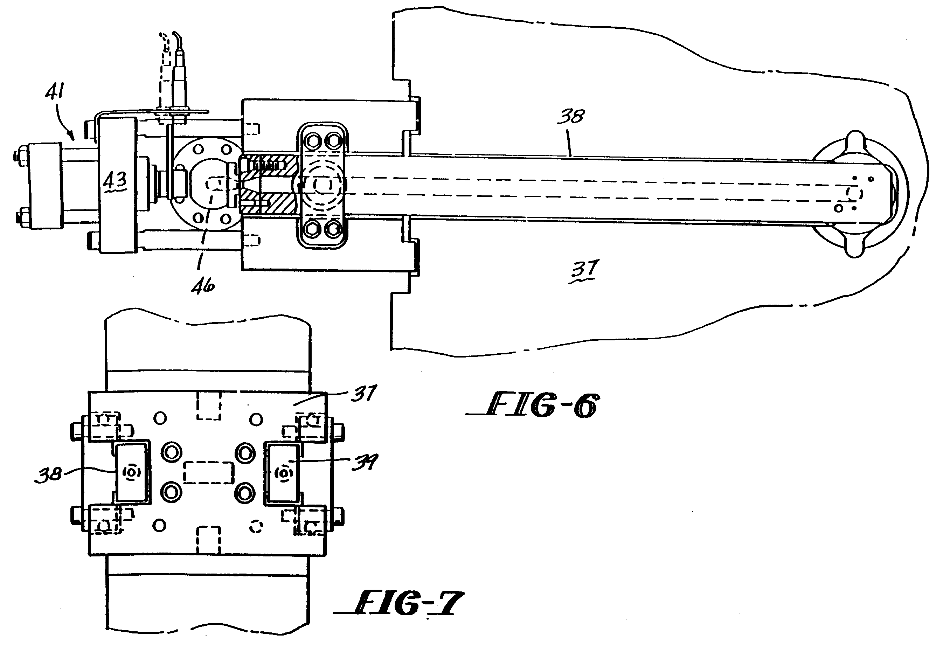

Figures 5, 6 and 7 show an alternative arrangement wherein a moveable platen 37, having opposed hot runner manifolds 38 and 39 supplying moldable material to molds at stations A and B, supports nozzle clamp means 41 and 42 individual to each mold station.

That is, in this arrangement the nozzle clamp means is separate from the molding material supply means and is fixed at each mold station.

Suitable power means such as piston-cylinder assemblies 43 and 44, under control of nozzle clamp control means S₁C₁ are operable to seal nozzle means 46 to respective hot runner manifolds (mold inlet means) when the extruder 47 is moved into registry with each manifold inlet.

## Claims

1. In an injection molding machine having a series of tandemly arranged molding stations (A, B) wherein each station includes a mold means (12, 13) and a mold inlet means (14, 16, 38, 39), movable supply means (19, 21, 37, 47) for introducing moldable material into said mold means (12, 13), nozzle means (22, 46) carried by said supply means (19, 21, 37, 47), power means (P) for moving said supply means (19, 21, 37, 47) operable to register said nozzle means (22, 46) with each said mold inlet means (14, 16, 38, 39), and nozzle clamp means (24) for sealing the nozzle means (22, 46) to mating mold inlet means (14, 16, 38, 39),
characterized in that
the nozzle clamp means (24) is carried by said supply means (19, 21, 37) and forms a unitary assembly together with the nozzle means (22, 46) which is moved from mold inlet means (14, 16, 38, 39) to mold inlet means.

2. The machine of claim 1 characterized in that the mold means (12, 13) includes a mold parting line (17, 18) and the mold inlet means (14, 16) is disposed generally coaxially with said parting line.

3. The machine of claim 2 characterized in that the mold inlet means (14, 16) is a seamless extension of the mold means (12, 13).

4. The machine of at least one of the claims 1 - 3, characterized in that the nozzle clamp means (24) and the mold inlet means (14, 16, 38, 39) make an interlocking connection.

5. The machine of claim 4 characterized in that the interlocking connection defines at least one dog (31, 32) and a cooperating slot (33, 34).

6. The machine of claim 5 characterized in that the dog (31, 32) is carried by one of said inlet means (14, 16, 38, 39) and said nozzle means (22, 46), and the slot (33, 34) is formed on the other of said inlet means (14, 16, 38, 39) and said nozzle means (22, 46).

7. The machine of claim 5 or 6 characterized in that the dog (31, 32) is fixed to said supply means (19, 21) and the slot (33, 34) is formed in said inlet means (14, 16, 38, 39).

8. The machine of one of the claims 5 - 7 characterized in that the supply means (19, 21, 37) includes nozzle clamp power means (26) for placing a mating dog (31, 32) and slot (33, 34) under tensile stress while pressing the nozzle means (22, 46) to a mating mold inlet means (14, 16, 38, 39) to create a seal.

9. The machine of at least one of claims 1 - 8 characterized in that the nozzle means (22, 46) includes a valve means (28) operable to seal the nozzle means (22, 46) when in transit from one molding station (A, B) to another molding station (B, A).

10. The machine of at lest one of claims 1 - 9 including a primary clamp means (PC) for clamping mold means (12, 13) at each mold station (A, B) along a first axis and a secondary or nozzle clamp means (24) for clamping a nozzle means (22, 46) to a mold inlet means (14, 16, 38, 39) wherein the secondary clamp means (24) clamps along a second axis which is generally perpendicular to said first axis,

11. The machine of at least one of the claims 1 - 10 characterized in that the mold inlet means defines a hot runner means (38, 39).

12. The machine of claim 11 characterized in that the mold stations (A, B) are separated by a platen means (37) and a hot runner means (38, 39) is disposed between the mold means (12, 13) and said platen means (37) at each mold station (A, B).

13. The machine of claim 12 characterized in that a platen means (37) common to a pair of adjacent mold stations includes the two hot runners (38, 39), the first hot runner (38) communicates with a first mold inlet said first mold inlet is disposed on one side of said platen, the second hot runner communicates with a second mold inlet said second mold inlet is disposed on an opposite side of said platen, supply means (47) are movable for introducing moldable material into each hot runner (38, 39), a nozzle (46) is carried by said supply means (47) said nozzle (46) being operable to connect with each hot runner (38, 39), and nozzle clamp means are carried by said supply means (37) for sealing said nozzle (46) to said first and second hot runners (38, 39) selectively whereby moldable material is supplied to each mold inlet individually via respective hot runners (38, 39), said nozzle clamp means making an interlocking connection with each hot runner (38, 39).

14. The machine of claim 13 including valve means (23) in said supply means (47) for closing said supply means (47) when the nozzle (46) is in transit between said first and second hot runners (38, 39).

15. A method of supplying each molding station (A, B) of an injection molding machine having at least two tandemly arranged molding stations (A, B) with moldable compound while making a sealing connection at respective stations characterized in that the steps of combining a moldable material supply means (19, 21, 47), a single nozzle means (22, 46) and a clamp means (24) into a unitary assembly and moving the assembly from station to station to seal the nozzle (22, 46) and to supply compound via said nozzle (22, 46) at each station (A, B) in sequence.

## Patentansprüche

1. Spritzgiessmaschine mit einer Reihe von tandemartig angeordneten Formstationen (A, B), wobei jede Station eine Gussform (12, 13) und einen Gussformeinlassteil (14, 16, 38, 39), bewegliche Zufuhreinrichtungen (19, 21, 37, 47) zum Einleiten von Giessmasse in die Gussform (12, 13), eine Düse (22, 46), welche von den Zufuhreinrichtungen (19, 21, 37, 47) gehalten wird, ein Antriebselement (P) zum Bewegen der Zufuhreinrichtungen (19, 21, 37, 47), damit eine Lageübereinstimmung von Düse (22, 46) und jedem Einlasselement (14, 16, 38, 39) hergestellt wird und eine Düsenklammer (24) zum passgenauen Abdichten der Düse (22, 46) mit dem Gussformeinlassteil (14, 16, 38, 39) aufweist,
dadurch gekennzeichnet,
dass die Düsenklammer (24) von dem Zufuhrelement (19, 21, 37) gehalten ist und zusammen mit der Düse (22, 46) ein einheitliches Bauteil bildet, welches von einem Gussformeinlassteil (14, 16, 38, 39) zum anderen Gussformeinlassteil bewegbar ist.

2. Maschine nach Anspruch 1, dadurch gekennzeichnet, dass die Gussform (12, 13) eine Formtrennlinie (17 und 18) aufweist und der Gussformeinlassteil (14, 16) im wesentlichen koaxial mit Trennlinie angeordnet ist.

3. Maschine nach Anspruch 2, dadurch gekennzeichnet, dass das Gussformeinlassteil (14, 16) eine nahtlose Anformung an die Gussform (12, 13) ist.

4. Maschine nach wenigstens einem der Ansprüche 1 - 3, dadurch gekennzeichnet, dass die Düsenklammer (24) und das Gussformeinlassteil (14, 16, 38, 39) eine aufhebbare Verbindung eingehen.

5. Maschine nach Anspruch 4, dadurch gekennzeichnet, dass zur aufhebbaren Verbindung wenigstens eine Klaue (31, 32) und eine Nut (33, 34) zusammenwirken.

6. Maschine nach Anspruch 5, dadurch gekennzeichnet, dass die Klaue (31, 32) entweder durch das Einlassteil (14, 16, 38, 39) und oder die Düse (22, 46) gehalten ist, während die Nut (33, 34) entweder an dem anderen Einlassteil (14, 16, 38, 39) und oder an der Düse (22, 46) ausgebildet ist.

7. Maschine nach Anspruch 5 oder 6, dadurch gekennzeichnet, dass die Klaue (31, 32) an der Zufuhreinrichtung (19, 21) befestigt ist und die Nut (33, 34) in das Einlassteil (14, 16, 38, 39) eingeformt ist.

8. Maschine nach einem der Ansprüche 5 - 7, dadurch gekennzeichnet, dass die Zufuhreinrichtung (19, 21, 37) eine Düseneinspannzwinge (26) aufweist, um eine zusammenwirkende Klaue (31, 32) und Nut (33, 34) unter Zugspannung zu setzen, während die Düse (22, 46) auf ein passgenaues Einlassteil (14, 16, 38, 39) gedrückt wird, um eine Abdichtung zu erzeugen.

9. Maschine nach wenigstens einem der Ansprüche 1 - 8, dadurch gekennzeichnet, dass der Düse (22, 46) ein Ventil (23) zugeordnet ist, welches in der Lage ist, die Düse (22, 46) während des Wegs von einer Formstation (A, B) zu einer anderen Formstation (B, A) zu verschliessen.

10. Maschine nach wenigstens einem der Ansprüche 1 - 9, mit einer ersten Klemmeinrichtung (PC) zum Schliessen der Gussform (12, 13) an jeder Formstation (A, B) entlang einer ersten Achse und einer zweiten Klemmeinrichtung oder Düsenklammer (24) zum Verspannen einer Düse (22, 46) mit einem Einlassteil (14, 16, 38, 39), wobei die zweite Klemmeinrichtung (24) entlang einer zweiten Achse verspannt wird, die im wesentlichen senkrecht zur ersten Achse verläuft.

11. Maschine nach wenigstens einem der Ansprüche 1 - 10, dadurch gekennzeichnet, dass dem Gussformeinlassteil eine Heisskanalleitung (38, 39) zugeordnet ist.

12. Maschine nach Anspruch 11, dadurch gekennzeichnet, dass die Formstationen (A, B) durch eine Platte (37) getrennt sind und eine Heisskanalleitung (38, 39) zwischen der Gussform (12, 13) und der Platte (37) in jeder Formstation (A, B) vorgesehen ist.

13. Maschine nach Anspruch 12, dadurch gekennzeichnet, dass eine einem Paar von benachbarten Formstationen zugeordnete Platte (37) zwei Heisskanalleitungen (38, 39) aufweist, wobei die erste Heisskanalleitung (38) mit einem bevorzugt auf einer Seite der Platte angeordneten, ersten Gussformeinlass verbunden ist, während die zweite Heisskanalleitung mit einem auf der gegenüberliegenden Seite der Platte angeordneten zweiten Gussformeinlass verbunden ist, dass ferner eine Zufuhreinrichtung (47) bewegbar angeordnet ist, um Formmasse in jede Heisskanalleitung (38, 39) einzuführen, dass eine Düse (46) von der Zufuhreinrichtung gehalten ist, wobei diese Düse in der Lage ist, mit jeder Heisskanalleitung (38, 39) verbunden zu werden, und dass die Düsenklammern von der Zufuhreinrichtung (47) gehalten werden, um die Düse (46) gegenüber der ersten und zweiten Heisskanalleitung (38, 39) abwechselnd abzudichten, wobei Formmasse zu jedem Gussformeinlass über die jeweiligen Heisskanalleitungen (38, 39) individuell zugeführt wird und wobei die Düsenklammer eine aufhebbare Verbindung zu jeder Heisskanalleitung (38, 39) herstellt.

14. Maschine nach Anspruch 13 mit einem Ventil (23) in der Zufuhreinrichtung (47) um die Zufuhreinrichtung (47) zu verschliessen, solange sich die Düse (46) auf dem Weg zwischen der ersten und der zweiten Heisskanalleitung (38, 39) befindet.

15. Verfahren zum Beschicken jeder Formstation (A, B) einer Spritzgiessvorrichtung mit Formmasse, die wenigstens zwei tandemartig angeordnete Formstationen (A, B) aufweist, wobei an der jeweiligen Stationen eine abgedichtete Verbindung hergestellt wird, gekennzeichnet durch ein Vereinigen einer Giessmassenzufuhreinrichtung (19, 21, 47), einer einzelnen Düse (22, 46) und einer Klammer (24) zu einem Bauteil und durch ein Bewegen des Bauteils von Station zu Station, um die Düse (22, 46) abzudichten und um über die Düse (22, 46) die Beschickungsmasse aufeinanderfolgend zu jeder Station (A, B) zu liefern .

## Revendications

1. Machine à mouler par injection, comportant une série de postes de moulage disposés en tandem (A, B) dans lesquels chaque poste comprend un moyen de moule (12, 13) et un moyen d'entrée de moule (14, 16, 38, 39), un moyen d'alimentation mobile ( 19, 21, 37, 47) destiné à introduire un matériau moulable dans le moyen de moule (12, 13), un moyen de buse (22, 46) porté par le moyen d'alimentation (19, 21, 37, 47), un moyen d'entraînement (P) destiné à déplacer le moyen d'alimentation (19, 21, 37, 47) et servant à faire coïncider le moyen de buse (22, 46) avec chacun des moyens d'entrée de moule (14, 16, 38, 39), et un moyen de blocage de buse (24) destiné à bloquer le moyen de buse (22, 46) avec un moyen d'entrée de moule correspondant (14, 16, 38, 39), caractérisée en ce que moyen de blocage de buse (24) est porté par le moyen d'alimentation (19, 21, 37) et forme un ensemble d'une seule pièce avec le moyen de buse (22, 46) qui est déplacé d'un moyen d'entrée de moule (14, 16, 38, 39) à un autre moyen d'entrée de moule.

2. Machine selon la revendication 1, caractérisée en ce que le moyen de moule (12, 13) comprend une ligne de séparation de moule (17, 18), et le moyen d'entrée de moule (14, 16) est disposé d'une façon générale coaxialement avec cette ligne de séparation.

3. Machine selon la revendication 2, caractérisée en ce que le moyen d'entrée de moule (14, 16) est un prolongement sans soudure du moyen de moule (12, 13).

4. Machine selon l'une au moins des revendications 1 à 3, caractérisée en ce que le moyen de blocage de buse (24) et le moyen d'entrée de moule (14, 16, 38, 39) forment une liaison d'enclenchement.

5. Machine selon la revendication 4, caractérisée en ce que la liaison d'enclenchement définit au moins un cliquet (31, 32) et une fente en coopération (33, 34).

6. Machine selon la revendication 5, caractérisée en ce que le cliquet (31, 32) est porté par l'un des moyens d'entrée (14, 16, 38, 39) et les moyens de buse (22, 46), tandis que la fente (33, 34) est formée sur l'autre des moyens d'entrée (14, 16, 38, 39) et les moyens de buse (22, 46).

7. Machine selon l'une des revendications 5 ou 6, caractérisée en ce que le cliquet (31, 32) est fixé au moyen d'alimentation (19, 21), et la fente (33, 34) est formée dans le moyen d'entrée (14, 16, 38, 39).

8. Machine selon l'une des revendications 5 à 7, caractérisée en ce que le moyen d'alimentation (19, 21, 37) comprend un moyen d'entraînement de blocage de buse (26) destiné à placer sous une contrainte de tension un cliquet (31, 32) emboîté dans une fente (33, 34), tout en pressant le moyen de buse (22, 46) contre le moyen d'entrée de moule correspondant (14, 16, 38, 39) pour former un joint d'étanchéité.

9. Machine selon l'une au moins des revendications 1 à 8, caractérisée en ce que le moyen de buse (22, 46) comprend un moyen de soupape (28) servant à fermer de manière étanche le moyen de buse (22, 46) lorsqu'il passe d'un poste de moulage (A, B) à un autre poste de moulage (B, A).

10. Machine selon l'une au moins des revendications 1 à 9, comprenant un moyen de blocage primaire (PC) pour bloquer le moyen de moule (12, 13) dans chaque poste de moulage (A, B) le long d'un premier axe, et un moyen de blocage de buse secondaire (24) pour bloquer un moyen de buse (22, 46) sur un moyen d'entrée de moule (14, 16, 38, 39), caractérisée en ce que le moyen de blocage secondaire (24) effectue le blocage le long d'un second axe généralement perpendiculaire au premier axe.

11. Machine selon l'une au moins des revendications 1 à 10, caractérisée en ce que le moyen d'entrée de moule définit un moyen de trou de coulée à chaud (38, 39).

12. Machine selon la revendication 11, caractérisée en ce que les postes de moulage (A, B) sont séparés par un moyen de platine (37), et en ce qu'un moyen de trou de coulée à chaud (38, 39) est disposé entre le moyen de moule (12, 13) et le moyen de platine (37) dans chaque poste de moulage (A, B).

13. Machine selon la revendication 12, caractérisée en ce qu'un moyen de platine (37) commun à une paire de postes de moulage adjacents, comprend les deux trous de coulée à chaud (38, 39), le premier trou de coulée à chaud (38) communique avec une première entrée de moule, cette première entrée de moule étant disposée d'un côté de la platine, le second trou de coulée à chaud communique avec une seconde entrée de moule, cette seconde entrée de moule étant disposée du côté opposé de la platine, les moyens d'alimentation (47) sont mobiles pour introduire le matériau moulable dans chaque trou de coulée à chaud (38, 39), une buse (46) est portée par le moyen d'alimentation (47), cette buse (46) servant à assurer la liaison avec chaque trou de coulée à chaud (38, 39), et les moyens de blocage de buse sont portés par le moyen d'alimentation (37) pour fermer sélectivement de manière étanche cette buse (46) par rapport au premier trou de coulée et au second trou de coulée (38, 39), de façon que le matériau moulable soit fourni individuellement à chaque entrée de moule par l'intermédiaire des trous de coulée à chaud respectifs (38, 39), le moyen de blocage de buse formant une liaison d'enclenchement avec chaque trou de coulée à chaud (38, 39).

14. Machine selon la revendication 13, caractérisée en ce qu'elle comprend un moyen de soupape (23) dans le moyen d'alimentation (47) pour fermer ce moyen d'alimentation (47) lorsque la buse (46) est en transit entre le premier trou de coulée à chaud et le second trou de coulée à chaud (38, 39).

15. Procédé d'alimentation de chaque poste de moulage (A, B) d'une machine à mouler par injection comportant au moins deux postes de moulage (A, B) disposés en tandem, par un composé moulable, tout en formant une liaison d'étanchéité dans les postes respectifs, caractérisé par les étapes consistant à combiner un moyen d'alimentation en matériau moulable (19, 21, 47), un moyen de buse unique (22, 46) et un moyen de blocage (24), en un ensemble d'une seule pièce, et à déplacer cet ensemble d'un poste à un autre pour assurer la fixation étanche de la buse (22, 46) et pour fournir séquentiellement le composé moulable à chaque poste (A, B) par l'intermédiaire de cette buse (22, 46).
